# EUROPÄISCHE PATENTANMELDUNG

(11) **EP 4 559 791 A1**
(43) Veröffentlichungstag der Anmeldung: **28.05.2025**
(21) Anmeldenummer: 23211776.2
(22) Anmeldetag: 23.11.2023
(51) Int. Cl.: B62J 6/26, B62J 6/04

(54) **WARNLEUCHTE ZUR BEFESTIGUNG AN EINEM FAHRZEUG, FAHRZEUG MIT DER WARNLEUCHTE SOWIE VERFAHREN ZUM BETREIBEN EINER WARNLEUCHTE**

(71) Anmelder: Klotz Besitzges. mbH & Co. KG, 82049 Pullach (DE)
(72) Erfinder: KLOTZ, Thomas, 82049 Pullach (DE)
(74) Vertreter: Meissner Bolte Partnerschaft mbB

(57) **Zusammenfassung**

Warnleuchte 1 zur Befestigung an einem Fahrzeug, insbesondere an einem Fahrrad, Elektrorad, Dreirad, Rollstuhl, Kranken-und Behindertenfahrzeug, Elektro- und/oder Tretroller die auch ohne externe Bestrahlung von Lenkpersonen anderen Fahrzeugen sichtbar ist, wobei die Warnleuchte 1 folgendes umfasst: ein Gehäuse 2; mindestens eine erste Leuchte 17, insbesondere eine Vielzahl von LEDs; einen Entfernungsmesser 15 zur Bestimmung einer Entfernung von anderen Fahrzeugen; und eine Steuerung 10, die mit dem Entfernungsmesser kommunikativ verbunden ist, um in Reaktion auf eine Annäherung eines anderen Fahrzeuges die mindestens eine erste Leuchte 17 anzusteuern.

## Beschreibung

Die Erfindung betrifft eine Warnleuchte zur Befestigung an einem Fahrzeug nach dem Oberbegriff des Anspruchs 1, ein Fahrzeug mit der Warnleuchte gemäß dem Oberbegriff des Anspruchs 12 sowie ein Verfahren zum Betreiben einer Warnleuchte gemäß dem Oberbegriff des Anspruchs 13.

Nach geltender Straßenverkehrsordnung sind insbesondere Fahrräder mit in Fahrtrichtung angebrachten Reflektoren zu versehen, damit diese in der Dunkelheit von Lenkerpersonen anderer Fahrzeuge erkannt werden, die im rechten Winkel zum Fahrrad auf dieses zufahren.

Der Nachteil dieser Reflektoren liegt darin, dass diese nur erkannt werden, wenn eine entsprechend starke Lichtquelle auf sie gerichtet ist, die beispielsweise bei einem anderen Fahrrad nicht zwingend vorgeschrieben ist. Zudem werden diese Reflektoren nicht sichtbar, wenn sich ein Fahrzeug parallel zum Fahrrad bewegt.

Daher sind die Reflektoren untauglich, um einen Fahrzeugführer dabei zu unterstützen, die gesetzlich vorgeschriebenen Sicherheitsabstände zwischen seinem Kraftfahrzeug zum parallel fahrenden Fahrrad einzuschätzen.

Ebenso ist der Kraftfahrzeugführer auf Grund von heutzutage nicht ausreichender Fahrradbeleuchtung nicht in der Lage die tatsächliche Breite des vorausfahrenden oder entgegenkommenden Fahrrads in der Dunkelheit richtig einzuschätzen, die häufig auf Grund von An- und Vorbauten (beispielsweise bei sogenannten Cargo- oder Lastenfahrrädern) bestimmt wird.

Handelsübliche Lichtanlagen für Fahrräder sind für die Vorder- und Rückbeleuchtung verfügbar, ebenso werden Anzeigensysteme beworben, die seitliche Mindestabstände darstellen.

Der Erfindung liegt die Aufgabe zu Grunde, eine Warnleuchte zur Befestigung an einem Fahrzeug, ein Fahrzeug mit der Warnleuchte, sowie eine Verfahren zum Betreiben einer Warnleuchte anzugeben, die auch ohne externe Bestrahlung von Lenkpersonen anderer Fahrzeuge sichtbar ist.

Erfindungsgemäß wird diese Aufgabe durch eine Warnleuchte zur Befestigung an einem Fahrzeug nach dem Gegenstand des Anspruchs 1, ein Fahrzeug mit der Warnleuchte nach dem Gegenstand des Anspruchs 12, sowie einem Verfahren zum Betreiben einer Warnleuchte nach dem Gegenstand des Anspruchs 13 gelöst.

Insbesondere wird die Aufgabe durch eine Warnleuchte zur Befestigung an einem Fahrzeug, insbesondere an einem Fahrrad, Elektrorad, Dreirad, Rollstuhl, Kranken-und Behindertenfahrzeug, Elektro- und/oder Tretroller, gelöst, wobei die Warnleuchte ein Gehäuse; mindestens eine erste Leuchte, insbesondere eine Vielzahl von LEDs; einen Entfernungsmesser zur Bestimmung einer Entfernung von anderen Fahrzeugen; und eine Steuerung, die mit dem Entfernungsmesser kommunikativ verbunden ist, um in Reaktion auf eine Annäherung eines anderen Fahrzeuges eine ersten Leuchte anzusteuern, umfasst.

Weiterhin wird die Aufgabe durch ein Fahrzeug, insbesondere Fahrrad, Elektrorad, Dreirad, Rollstuhl, Kranken-und Behindertenfahrzeug, Elektro- und/oder Tretroller, mit der Warnleuchte gelöst, wobei die Warnleuchte seitlich derart, insbesondere an einem Gestänge, angebracht ist, dass die ersten Leuchten Licht (im Wesentlichen) quer, vorzugsweise horizontal und quer, zu einer Fahrtrichtung des Fahrzeugs abstrahlen.

Außerdem wird die Aufgabe durch ein Verfahren zum Betreiben einer Warnleuchte gelöst, wobei das Verfahren Folgendes umfasst: Bestimmen einer Entfernung von anderen Fahrzeugen; Ausgeben oder Verändern eines Steuerungsparameters auf Grundlage der bestimmten Entfernung; und Steuern, insbesondere An- oder Ausschalten, vorzugsweise Erhöhen oder Verringern der Helligkeit, der ersten Leuchten, auf Grundlage des Steuerungsparameters.

Ein wesentlicher Punkt der Erfindung liegt darin, dass bei einer Annäherung von anderen Fahrzeugen die Sichtbarkeit des Fahrzeuges, insbesondere einem Fahrrad, Elektrorad, Dreirad, Rollstuhl, Kranken-und Behindertenfahrzeug, Elektro- und/oder Tretroller, durch die ersten Leuchten erhöht wird.

Der Entfernungsmesser kann vorzugsweise als Infrarot-, Ultraschall- oder Lasersensor ausgeführt sein. Das ist vorteilhaft, da auf diese Art und Weise kostengünstig und zuverlässig die Entfernung bestimmt werden kann.

Die ersten Leuchten sind vorzugsweise dazu ausgebildet, Licht im gelben und/oder weißen Farbspektrum abzustrahlen. Die ersten Leuchten können auf einer ersten Oberfläche des Gehäuses angeordnet sein, die in einer Einbaulage der Warnleuchte im Wesentlichen parallel zu der Fahrtrichtung des Fahrzeuges verläuft, insbesondere von dem Fahrzeug weggerichtet ist.

Der Steuerungsparameter kann ein Binärwert sein. Den Ziffern 0 und 1 kann jeweils die Eigenschaft "Fahrzeug innerhalb eines Sicherheitsabstandes" oder "Fahrzeug außerhalb eines Sicherheitsabstandes" eindeutig zugeordnet sein. Das ist vorteilhaft, da auf diese Art und Weise die Steuerung einfach und schnell ausgeführt werden kann.

Der Steuerungsparameter kann ein Dezimalwert sein. Der Dezimalwert kann der gemessenen Entfernung entsprechen oder der gemessenen Entfernung zugeordnet werden. Bei einer Annäherung eines anderen Fahrzeuges kann der Dezimalwert kontinuierlich verringert oder erhöht werden. Das ist vorteilhaft, da auf diese Art und Weise die Steuerung weitere Zustände unterscheiden kann.

Die Warnleuchte kann einen Stromspeicher, insbesondere einen wiederaufladbaren Stromspeicher, umfassen. Der Stromspeicher kann mit der Steuerung verbunden sein. Der Stromspeicher kann die Warnleuchte mit Strom versorgen. Der Stromspeicher kann im Gehäuse integriert sein und über einen am Gehäuse ausgebildeten Stromanschluss aufladbar sein. Das ist vorteilhaft, da auf diese Art und Weise keine externe Stromversorgung während des Betriebes der Warnleuchte benötigt wird.

Das Gehäuse kann so gestaltet sein, dass es gegen ein Eindringen von Feuchtigkeit geschützt ist. Insbesondere kann das Gehäuse spritzwassergeschützt sein. Das ist vorteilhaft, da auf diese Art und Weise die Gefahr eines Kurzschlusses durch Feuchtigkeit verringert wird.

Im Rahmen der Erfindung ist unter "Fahrtrichtung" die Richtung zu verstehen, in die das Fahrzeug angetrieben wird.

Im Rahmen der Erfindung ist unter "seitlich angebracht" der Zustand zu verstehen, in dem die Warnleuchte in einer zur Fahrtrichtung parallel verlaufenden Ebene am Fahrzeug angebracht ist.

Im Rahmen der Erfindung ist unter "quer zur einer Fahrtrichtung" die Richtung zu verstehen, die zu einer Fahrtrichtung im Wesentlichen orthogonal verläuft, insbesondere zu der Fahrtrichtung in einem Winkel von maximal +/- 30° verläuft.

Im Rahmen der Erfindung ist unter "Einbaulage" der Zustand zu verstehen, in dem die Warnleuchte an oder in dem Fahrzeug angebracht oder angeordnet ist.

Bevorzugte Ausführungsformen der Erfindung sind in den Unteransprüchen angegeben.

In einer bevorzugten Ausführungsform der Warnleuchte umfasst die Warnleuchte zweite Leuchten, insbesondere LEDs, wobei mindestens eine der zweiten Leuchten blinkend ausgestaltet ist und/oder Licht im Wesentlichen quer, vorzugsweise horizontal und quer, in Fahrtrichtung eines Fahrzeuges sowie entgegen der Fahrtrichtung des Fahrzeuges abstrahlt. Die einen oder mehreren zweiten Leuchten können dazu ausgebildet sein, Licht in einem Farbspektrum abzustrahlen, das sich vom Farbspektrum der ersten Leuchte unterscheidet. Vorzugsweise strahlen die einen oder mehreren zweiten Leuchten Licht im roten Farbspektrum ab. Die einen oder mehreren zweiten Leuchten können Licht in Fahrtrichtung des Fahrzeuges und/oder Licht entgegen der Fahrtrichtung des Fahrzeuges abstrahlen. Insbesondere können eine oder mehrere der zweiten Leuchten auf der ersten Oberfläche des Gehäuses und/oder auf einer in Fahrtrichtung des Fahrzeuges nach hinten gerichteten Oberfläche angeordnet sein. Das ist vorteilhaft, da auf diese Art und Weise die Sichtbarkeit des Fahrzeugs für parallel zu diesen sich bewegenden anderen Fahrzeugen erhöht wird, ohne dass die anderen Fahrzeuge eine ausreichend starke Lichtquelle auf das Fahrzeug richten.

In einer weiter bevorzugten Ausführungsform der Warnleuchte umfasst die Warnleuchte einen Lagesensor, der eine erhebliche Abweichung der Lage der Warnleuchte von der Einbaulage der Warnleuchte erkennt. Der Lagesensor kann als Gyrosensor ausgebildet sein. Die Lage der am Fahrzeug angebrachten und ausgerichteten Warnleuchte kann als Einbaulage initiiert werden. Sobald sich die Lage der Warnleuchte verändert, beispielsweise durch Verdrehen der Warnleuchte, kann der Lagesensor eine wesentliche Abweichung, insbesondere einer Verdrehung der Warnleuchte von mehr als +/- 5° um eine Achse der Warnleuchte, der Lage der Warnleuchte von der Einbaulage der Warnleuchte registrieren. Dies ist vorteilhaft, da auf diese Art und Weise die Warnleuchte bei einer erheblichen Abweichung der Lage der Warnleuchte von der Einbaulage der Warnleuchte entsprechend gesteuert werden kann, um ein Blenden der anderen Fahrzeuge zu vermeiden.

In einer weiter bevorzugten Ausführungsform der Warnleuchte ist die Steuerung im Gehäuse befestigt, insbesondere feder-elastisch gelagert. Die Steuerung kann durch Linearfedern und/oder Federelementen am Gehäuse, insbesondere an einer Rückwand der Warnleuchte befestig sein. Die Linearfeder und/oder Federelemente sind so ausgebildet, dass sie sich bei Einwirken von äußeren Kräften, insbesondere Stoßen, elastisch verformen. Dies ist vorteilhaft, da auf diese Art und Weise eine Verschiebung der Steuerung relativ zum Gehäuse reduziert, insbesondere verhindert wird. Außerdem kann dadurch eine Beschädigung der Steuerung und/oder eine Beschädigung der Verbindung zwischen der Steuerung und anderen elektronischen Komponenten verhindert werden.

In einer weiter bevorzugten Ausführungsform der Warnleuchte ist der Entfernungsmesser innerhalb des Gehäuses, insbesondere unter einem transparenten Element, angeordnet. Das transparente Element ist vorzugsweise durchlässig für Infrarotlicht, Ultraschall und/oder Laserstrahlen. Das transparente Element kann aus einem anderen Material als das Gehäuse ausgebildet sein. Das ist vorteilhaft, da auf diese Art und Weise der Entfernungsmesser vor äußeren Einflüssen geschützt ist und gleichzeitig durch das transparente Element eine zuverlässige Messung des Entfernungsmessers ermöglicht wird.

In einer weiter bevorzugten Ausführungsform der Warnleuchte wird bei Unterschreiten einer vergebenen, insbesondere herstellerseitig vergebenen, Entfernung von anderen Fahrzeugen zu der Warnleuchte eine Taktrate des Entfernungsmessers erhöht. Bei Überschreiten der vorgegebenen Entfernung von anderen Fahrzeugen zu der Warnleuchte kann der Entfernungsmesser Signale mit einer festgelegten, insbesondere geringeren, Taktrate aussenden. Das ist vorteilhaft, da auf diese Art und Weise der Stromverbrauch des Entfernungsmessers reduziert werden kann. Außerdem kann bei Unterschreiten einer vergebenen Entfernung die Entfernung von anderen Fahrzeugen genauer bestimmt werden.

In einer weiter bevorzugten Ausführungsform der Warnleuchte ist das Gehäuse teilweise, insbesondere vollständig, mit einem Aufprallschutz aus elastischem material versehen. Der Aufprallschutz kann durch Umspritzen des Gehäuses hergestellt sein. Der Aufprallschutz kann mit dem Gehäuse fest verbunden, insbesondere verklebt, sein. Der Aufprallschutz kann auch formschlüssig am Gehäuse angebracht sein, um den Aufprallschutz bei Verschleiß oder bei Beschädigung auszuwechseln. Der Aufprallschutz kann so ausgebildet sein, dass er sich bei einem Einwirken von äußeren Kräften, insbesondere Stößen, elastisch verformt. Der Aufprallschutz kann aus einem Kunststoff, insbesondere einem Elastomer, ausgebildet sein. Das ist vorteilhaft, da auf diese Art und Weise das Gehäuse vor Beschädigungen geschützt werden kann und eine Dichtigkeit der Warnleuchte weiter verbessert werden kann.

In einer weiter bevorzugten Ausführungsform der Warnleuchte umfasst die Warnleuchte zusätzlich eine Haltevorrichtung, vorzugsweise eine auf dem Gehäuse ausgebildete Haltevorrichtung, die von einem Gegenstück lösbar, insbesondere ohne Werkzeug lösbar, aufnehmbar ist. Die Haltevorrichtung kann auf einer Rückwand ausgebildet sein, die in Einbaulage der Warnleuchte zum Fahrzeug gerichtet ist. Die Haltevorrichtung kann einstückig mit dem Gehäuse hergestellt sein. Das Gegenstück kann mit dem Fahrzeug fest verbunden sein. Die Haltevorrichtung kann mit dem Gegenstück als Rast- oder Schnappverbindung ausgebildet sein. Die Haltevorrichtung kann von dem Gegenstück durch zurückdrücken einer Rast- oder Schnappnase gelöst werden. Ebenso kann die Haltevorrichtung mit einem abnehmbaren Clip versehen werden, um die Warnleuchte beispielsweise an der Kleidung, einem Tragesack oder einem Gurt zu befestigen. Dies ist vorteilhaft, da auf diese Art und Weise eine zuverlässige Verbindung der Warnleuchte mit dem Fahrzeug oder der tragenden Person ermöglich wird. Außerdem kann die Warnleuchte, beispielsweise zum Aufladen der Stromversorgung, einfach vom Fahrzeug oder von der tragenden Person entfernt werden.

In einer weiter bevorzugten Ausführungsform der Warnleuchte umfasst die Warnleuchte einen Projektor, der eine Grafik auf den Boden projiziert. Der Projektor kann auf einer Projektorhalterung angebracht sein. Vorzugsweise projiziert der Projektor die Grafik parallel in Fahrtrichtung des Fahrzeuges auf den Boden, vorzugsweise auf den Boden seitlich neben dem Fahrzeug. Der Projektor kann mit der Steuerung kommunikativ verbunden sein, so dass die Steuerung in Reaktion auf eine Annährung eines anderen Fahrzeuges den Projektor ansteuert. Der Projektor kann mit dem Lagesensor kommunikativ verbunden sein. Der Projektor kann als Laserprojektor ausgebildet sein. Der Projektor kann innerhalb des Gehäuses angeordnet sein. Das ist vorteilhaft, da auf diese Art und Weise bereits von weitem auf die Abmessungen des Fahrzeuges und den Sicherheitsabstand aufmerksam gemacht wird.

In einer weiter bevorzugten Ausführungsform der Warnleuchte umfasst die Warnleuchte einen Verstellhebel zum Einstellen eines Anstellwinkels des Projektors. Der Anstellwinkel kann durch den Winkel zwischen der Längsachse des Projektors und einer zu der Fahrtrichtung des Fahrzeuges parallel verlaufende Ebene der Warnleuchte in Einbaulage gebildet sein. Der Verstellhebel kann den Anstellwinkel des Projektors so verändern, dass dadurch die Entfernung der projizierten Grafik zu dem Fahrzeug verringert oder erhöht wird. Der Verstellhebel kann an einer Oberfläche des Gehäuses ausgebildet sein, sodass der Verstellhebel ohne eine Demontage der Warnleuchte bedienbar ist. Der Verstellhebel kann mit der Projektorhalterung verbunden sein. Vorzugsweise kann durch den Verstellhebel die Stellung der Projektorhalterung verändert werden, um den Anstellwinkel des Projektors zu verändern. Das ist vorteilhaft, da auf diese Art und Weise die Entfernung der projizierten Grafik auf den Boden abhängig von den Abmessungen des Fahrzeuges oder der Befestigungshöhe der Warnleuchte am Fahrzeug eingestellt werden kann und gleichzeitig ein Blenden anderer Fahrzeuge vermieden wird.

In einer weiter bevorzugten Ausführungsform der Warnleuchte sind die ersten Leuchten derart im oder am Gehäuse angeordnet, dass die ersten Leuchten Licht im Wesentlichen quer, vorzugsweise horizontal und quer, zu einer Fahrtrichtung des Fahrzeuges abstrahlen. Dies ist vorteilhaft, da auf diese Art und Weise das Fahrzeug von sich im Wesentlichen senkrecht zu der Fahrtrichtung des Fahrzeuges annähernden anderen Fahrzeugen besser erkannt wird.

In einer bevorzugten Ausführungsform des Verfahrens zum Betreiben der Warnleuchte wird ein Projektor auf Grundlage des Steuerungsparameters ein- oder ausgeschalten. Das ist vorteilhaft, da auf diese Art und Weise ein Blenden der anderen Fahrzeuge vermieden werden kann.

In einer bevorzugten Ausführungsform des Verfahrens zum Betreiben der Warnleuchte wird die Ausrichtung der Warnleuchte wiederholt bestimmt und ein Projektor bei einer Abweichung der Ausrichtung der Warnleuchte von der Einbaulage der Warnleuchte ausgeschalten. Die Ausrichtung der Warnleuchte kann durch einen Lagensensor bestimmt werden. Der Lagesensor kann als Gyrosensor ausgebildet sein. Die Lage der am Fahrzeug angebrachten und ausgerichteten Warnleuchte kann als Einbaulage initiiert werden. Sobald sich die Lage der Warnleuchte verändert, beispielsweise durch Verdrehen der Warnleuchte, kann eine wesentliche Abweichung, insbesondere einer Verdrehung der Warnleuchte von mehr als +/- 5° um eine Achse der Warnleuchte, der Lage der Warnleuchte von der Einbaulage der Warnleuchte registriert werden. Dies ist vorteilhaft, da auf diese Art und Weise ein Blenden von anderen Fahrzeugen durch den Projektor vermieden wird.

In einer weiteren Ausführungsform des Verfahrens zum Betreiben der Warnleuchte wird der Lagesensor dazu verwendet, Erschütterungen aufzunehmen. Bei Ausbleiben von Erschütterungen kann die Warnleuchte automatisch ausgeschaltet werden. Das ist vorteilhaft, da auf diese Weise Strom gespart werden kann.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Warnleuchte ausgestaltet sein kann.

Darin zeigen:
Figur 1 Eine perspektivische Darstellung einer Ausführungsform der erfindungsgemäßen Warnleuchte in Einbaulage.
Figur 2 Die perspektivische Darstellung aus Figur 1 jedoch mit einem teilweise aufgeschnittenen Aufprallschutz.
Figur 3 Eine Darstellung einer weiteren Ausführungsform der erfindungsgemäßen Warnleuchte mit elektrischen bzw. mechanischen Elemente sowie deren Lage in der Warnleuchte in einer beispielhaften perspektivischen Darstellung.
Figur 4 Eine obere Ansicht der Darstellung aus Figur 3 mit den in der Figur 3 nicht sichtbaren Elemente.
Figur 5 Eine perspektivische Darstellung weitere Ausführungsform der erfindungsgemäßen Warnleuchte mit einem Clip zur Befestigung der Warnleuchte an einer Person.
Figur 6 Eine perspektivische Darstellung einer weiteren Ausführung der erfindungsgemäßen Warnleuchte ohne Laserprojektor.

Im Folgenden werden für gleiche und gleich wirkende Teile dieselben Bezugsziffern verwendet.

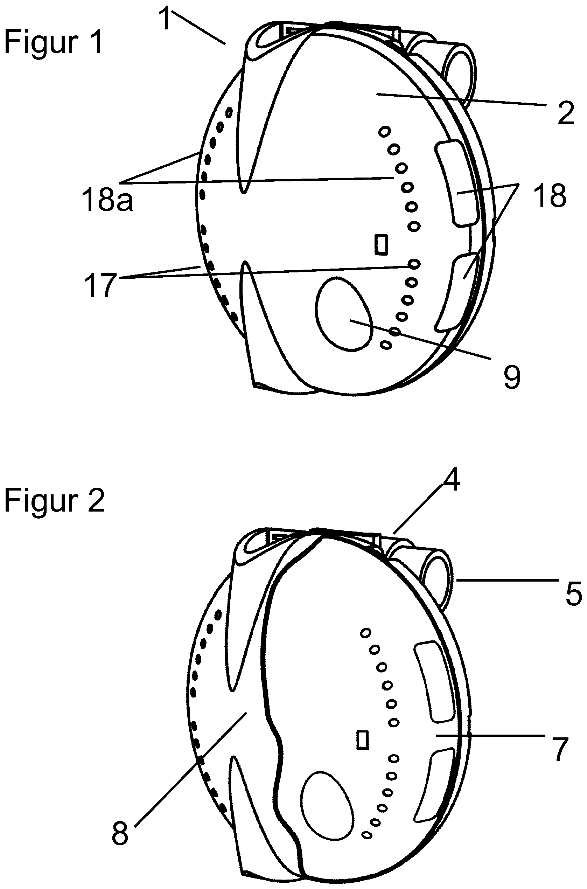

Figur 1 zeigt eine Warnleuchte 1 in Einbaulage. Die Warnleuchte 1 umfasst ein Gehäuse 2, das mittels einer einfach zu lösenden Haltevorrichtung 3 (nicht gezeigt) in einem entsprechenden Gegenstück 4 eingesetzt ist, sowie mehrere erste Leuchten 17 und zweite Leuchten 18, 18a. Auf einer ersten Oberfläche des Gehäuses, die im Wesentlichen parallel zu einer Fahrtrichtung des Fahrzeuges verläuft und von diesem weggerichtet ist, ist ein transparentes Element 9 auf dem Gehäuse angeordnet.

Figur 2 zeigt die Warnleuchte 1 in Einbaulage. Auf der ersten Oberfläche des Gehäuses 2 ist ein Aufprallschutz 8 ausgebildet. Die ersten Leuchten 17sind auf der ersten Oberfläche des Gehäuses ausgebildet. Die zweiten Leuchten 18, 18a sind ebenfalls auf der ersten Oberfläche des Gehäuses ausgebildet, wobei zwei der zweiten Leuchten 18 auf der zweiten Oberfläche 7 des Gehäuses angeordnet und in Einbaulage der Warnleuchte nach hinten gerichtet sind. Das Gegenstück 4 ist mit einem Gestänge 5 verbunden. Auf der zweiten Oberfläche ist in Einbaulage der Warnleuchte oben ein Betriebs- oder Betriebsmodusschalter 14 angeordnet.

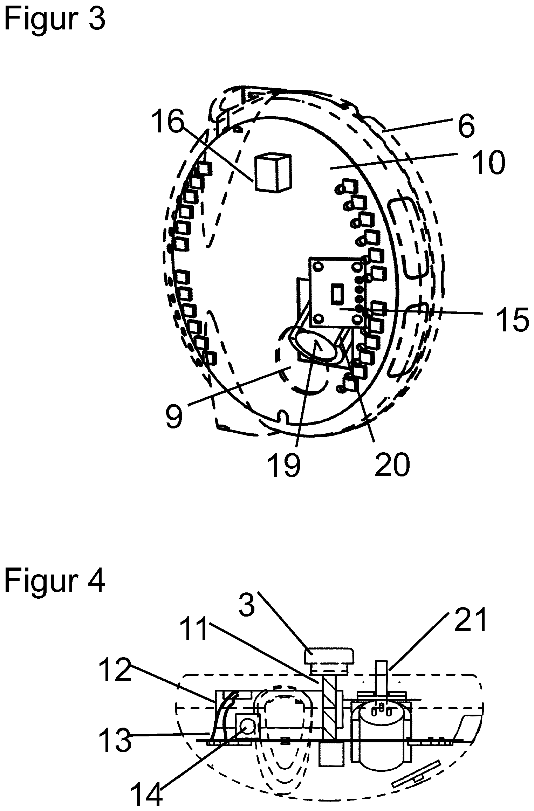

Figur 3 zeigt die Komponenten die im oder am Gehäuse 2 angeordnet sind sowie die Rückwand 6. Die Warnleuchte umfasst einen Stromspeicher 12, einen Stromanschluss 13, einen Projektor 19, eine Projektorhalterung 20, einen Entfernungsmesser 15, eine Steuerung 10, einen Lagesensor 16, erste Leuchten 17 sowie zweite Leuchten 18, 18a. Die Steuerung 10 ist mit der Rückwand 6 verbunden. Zwei zweite Leuchten 18 sind im Wesentlichen senkrecht zu der Rückwand 6 angeordnet, wobei die zwei zweiten Leuchten 18 in Einbaulage der Warnleuchte nach hinten gerichtet sind. Der Projektor 19 ist auf der Projektorhalterung 20 angeordnet. Durch die Bewegung der Projektorhalterung 20 kann ein Anstellwinkel des Projektors 19 verändert werden.

Figur 4 zeigt eine obere Ansicht der Figur 3. Die Steuerung 10 ist mit den Linearfedern und/oder Federelementen 11 mit der Rückwand 6 verbunden. An der Rückwand 6 ist der Verstellhebel hervorstehend ausgebildet. Außerdem ist eine Haltevorrichtung 3 mit der Rückwand 6 einteilig nach außen hervorstehend ausgebildet.

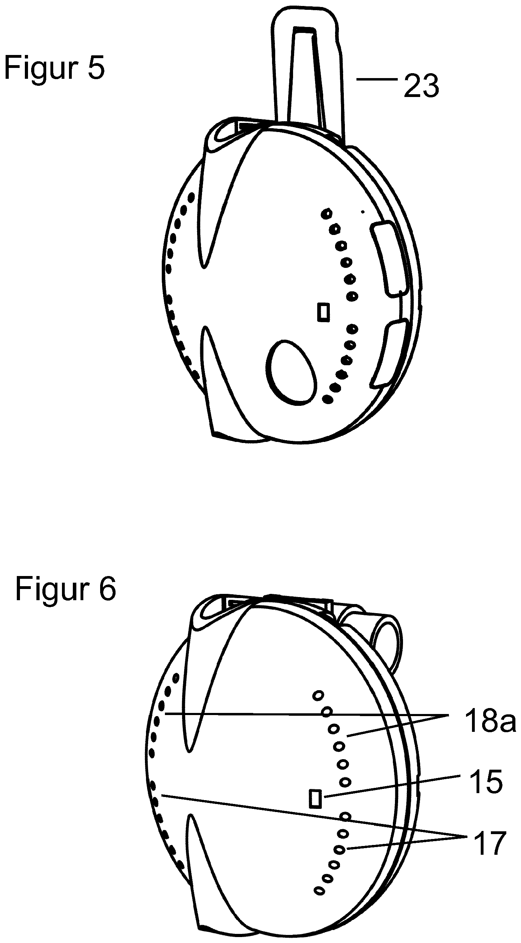

Die Figur 5 zeigt eine Warnleuchte 1 zur Befestigung an der Kleidung der tragenden Person, an einem Tragegurt eines Rucksacks oder an einem anderen Gurt.

Die Figur 6 zeigt eine Warnleuchte 1, die keinen Projektor 19 und keine nach hinten gerichteten zusätzlichen zweiten Leuchten beinhaltet.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

Es folgen erfindungsgemäße Ausführungsbeispiele.

### Ausführungsbeispiel 1:

Vorrichtung 1 zur längsseitigen Befestigung seitlich an einem Fahrzeug, insbesondere an Fahrrädern, Elektrorädern, Dreirädern, Rollstühlen, Kranken-und Behindertenfahrzeugen, Elektro- und Tretrollern und ähnlichen Fahrzeugen (im Folgenden der Einfachheit halber nur "Fahrrad" oder "Fahrräder" genannt), die in rechten Winkel zur Fahrtrichtung ein gelbes oder weißen Warnlicht abstrahlt, welches von einem am Fahrrad vorbeifahrenden oder in rechten Winkel zum Fahrrad befindlichen Fahrzeug und dem Fahrer selbst wahrgenommen werden kann.

### Ausführungsbeispiel 2:

Die Vorrichtung 1 verfügt über einen Entfernungssensor, der Objekte innerhalb eines herstellerseitig vorgegebenen Abstands zur Längsrichtung der Vorrichtung erkennt und mittels einer in Vorrichtung 1 befindlichen Steuerung das Warnlicht aus dem Ausführungsbeispiel 1 entweder anschaltet oder dessen Helligkeit verändert.

### Ausführungsbeispiel 3:

Die Vorrichtung 1 kann zusätzlich zu einem oder zwei weiteren roten Leuchten verfügen, die entgegen der landesüblichen Fahrtrichtung strahlen.

### Ausführungsbeispiel 4:

Die Vorrichtung 1 kann zusätzlich über einem Projektor verfügen, der eine Grafik parallel zur Fahrtrichtung seitlich zum Fahrzeug auf den Boden zwischen Fahrzeug und anderen parallel dazu fahrenden Fahrzeigen projiziert.

### Ausführungsbeispiel 5:

Die Vorrichtung 1 gemäß dem Ausführungsbeispiel 4, wobei der Projektor dergestalt beweglich gelagert ist, dass der Abstand der Projektion zum Fahrzeug einstellbar ist.

### Ausführungsbeispiel 6:

Die Vorrichtung 1 gemäß einem der Ausführungsbeispiele 4 oder 5, wobei der Projektor mittels des in Vorrichtung 1 befindlichen in in dem Ausführungsbeispiel 2 beschriebenen Entfernungssensors abgeschaltet werden kann, sobald sich ein Objekt innerhalb eines weiteren vorgegebenen Abstands zum Entfernungssensor befindet, wobei dieser Abstand unabhängig zum Abstand aus Ausführungsbeispiel 2 eingestellt werden kann

### Ausführungsbeispiel 7:

Die Vorrichtung 1 gemäß einem der Ausführungsbeispiele 4 bis 6, wobei der Projektor mittels einer in Vorrichtung 1 befindlichen Lagesensors abgeschaltet werden kann, sobald die Vorrichtung 1 wesentlich aus der normalen, senkrechten Betriebsposition bewegt wird.

### Ausführungsbeispiel 8:

Die Vorrichtung 1, wobei die in der Vorrichtung 1 befindliche Platine und ihre elektronischen Komponenten feder- oder elastische gelagert im Gehäuse montiert sind.

### Ausführungsbeispiel 9:

Die Vorrichtung 1, wobei die gesamte Vorrichtung 1 fest in einem Fahrrad eingebaut werden kann.

### Ausführungsbeispiel 10:

Die Vorrichtung 1, wobei die Vorrichtung mittels einer Halterung dergestalt am Fahrrad oder an einer Person befestigt werden kann, dass sie ohne Zuhilfenahme von Werkzeugen leicht entnommen werden kann.

### Ausführungsbeispiel 11:

Vorrichtung 2 zur längsseitigen Befestigung seitlich an einem Fahrzeug, insbesondere an Fahrrädern, Elektrorädern, Dreirädern, Rollstühlen, Kranken-und Behindertenfahrzeugen, Elektro- und Tretrollern und ähnlichen Fahrzeugen (im Folgenden der Einfachheit halber nur "Fahrrad" oder "Fahrräder" genannt), die in rechten Winkel zur Fahrtrichtung ein gelbes oder weißen Warnlicht abstrahlt, welches von einem am Fahrrad vorbeifahrenden oder in rechten Winkel zum Fahrrad befindlichen Fahrzeug und dem Fahrer selbst wahrgenommen werden kann.

### Ausführungsbeispiel 12:

Die Vorrichtung 2 verfügt über einen Entfernungssensor, der Objekte innerhalb eines herstellerseitig vorgegebenen Abstands zur Längsrichtung der Vorrichtung erkennt und mittels einer in Vorrichtung 2 befindlichen Steuerung ein zusätzliches Warnlicht aus Anspruch 1 entweder anschaltet oder dessen Helligkeit verändert.

### Ausführungsbeispiel 13:

Die Vorrichtung 2 über ein zusätzliches rotes Warnlicht verfügt, das entgegen der Fahrtrichtung abstrahlt.

### Ausführungsbeispiel 14:

Die Vorrichtung 2, wobei die in der Vorrichtung 2 befindliche Platine und ihre elektronischen Komponenten feder- oder elastische gelagert im Gehäuse montiert sind.

### Ausführungsbeispiel 15:

Die Vorrichtung 2, wobei die gesamte Vorrichtung 2 fest in einem Fahrrad eingebaut werden kann.

### Ausführungsbeispiel 16:

Die Vorrichtung 2, wobei die Vorrichtung 2mittels einer Halterung dergestalt am Fahrrad oder an einer Person befestigt werden kann, dass sie ohne Zuhilfenahme von Werkzeugen leicht entnommen werden kann.

### Ausführungsbeispiel 17:

Vorrichtung 3 zum Einbau in einem Fahrzeug, insbesondere an Fahrrädern, Elektrorädern, Dreirädern, Rollstühlen, Kranken- und Behindertenfahrzeugen, Elektro- und Tretrollern und ähnlichen Fahrzeugen (im Folgenden der Einfachheit halber nur "Fahrrad" oder "Fahrräder" genannt), die in rechten Winkel zur Fahrtrichtung ein gelbes oder weißen Warnlicht abstrahlt, welches von einem am Fahrrad vorbeifahrenden oder in rechten Winkel zum Fahrrad befindlichen Fahrzeug und dem Fahrer selbst wahrgenommen werden kann, wobei

### Ausführungsbeispiel 18:

Die Vorrichtung 3 über einen Entfernungssensor verfügt, der Objekte innerhalb eines herstellerseitig vorgegebenen Abstands zur Längsrichtung der Vorrichtung erkennt und mittels einer in Vorrichtung 3 befindlichen Steuerung das Warnlicht aus Anspruch 1 entweder anschaltet oder dessen Helligkeit verändert

### Ausführungsbeispiel 19:

Die Vorrichtung 3, wobei die Vorrichtung 3 über ein zusätzliches rotes Warnlicht verfügen kann, das entgegen der Fahrtrichtung abstrahlt.

### Ausführungsbeispiel 20:

Die Vorrichtung 3, wobei die gesamte Vorrichtung 3 fest in einem Fahrrad eingebaut werden kann.

### Bezugszeichenliste

- 1: Warnleuchte
- 2: Gehäuse
- 3: Haltevorrichtung
- 4: Gegenstück der Haltevorrichtung
- 5: Gestänge
- 6: Rückwand
- 7: zweite Oberfläche
- 8: Aufprallschutz (geschnitten)
- 9: transparentes Element
- 10: Steuerung
- 11: Linearfedern und/oder Federementen
- 12: Stromspeicher
- 13: Stromanschluss
- 14: Betriebs-, Betriebsmodusschalter
- 15: Entfernungsmesser
- 16: Lagesensor
- 17: erste Leuchten
- 18, 18a: zweite Leuchten
- 19: Projektor
- 20: Projektorhalterung
- 21: Verstellhebel
- 23: Befestigungs-Clip

## Patentansprüche

1. Warnleuchte (1) zur Befestigung an einem Fahrzeug, insbesondere an einem Fahrrad, Elektrorad, Dreirad, Rollstuhl, Kranken-und Behindertenfahrzeug, Elektro- und/oder Tretroller, wobei die Warnleuchte folgendes umfasst:
ein Gehäuse (2);
mindestens eine erste Leuchte (17), insbesondere eine Vielzahl von LEDs;
einen Entfernungsmesser (15) zur Bestimmung einer Entfernung von anderen Fahrzeugen; und
eine Steuerung (10), die mit dem Entfernungsmesser kommunikativ verbunden ist, um in Reaktion auf eine Annäherung eines anderen Fahrzeuges die mindestens eine erste Leuchte (17) anzusteuern.

2. Warnleuchte (1) zur Befestigung an einem Fahrzeug nach Anspruch 1, ferner umfassend:
eine oder mehrere zweite Leuchten (18, 18a), insbesondere LEDs, wobei vorzugsweise mindestens eine der zweiten Leuchten (18, 18a) blinkend ausgestaltet ist.

3. Warnleuchte (1) zur Befestigung an einem Fahrzeug nach einem der Ansprüche 1 oder 2, ferner umfassend:
einen Lagesensor (16), der eine erhebliche Abweichung der Lage der Warnleuchte von einer Einbaulage der Warnleuchte (1) erkennt.

4. Warnleuchte (1) zur Befestigung an einem Fahrzeug nach einem der vorherigen Ansprüche,
wobei die Steuerung (10) im Gehäuse (2) befestigt ist, insbesondere feder-elastisch gelagert ist.

5. Warnleuchte (1) zur Befestigung an einem Fahrzeug nach einem der vorherigen Ansprüche,
wobei der Entfernungsmesser (15) innerhalb des Gehäuses (2), insbesondere unter einem transparenten Element (9), angeordnet ist.

6. Warnleuchte (1) zur Befestigung an einem Fahrzeug nach einem der vorherigen Ansprüche,
wobei bei Unterschreiten einer vergebenen Entfernung von anderen Fahrzeugen zu der Warnleuchte (1) eine Taktrate des Entfernungsmessers (15) erhöht wird.

7. Warnleuchte (1) zur Befestigung an einem Fahrzeug nach einem der vorherigen Ansprüche,
wobei das Gehäuse (2) teilweise, insbesondere vollständig, mit einem Aufprallschutz (8) aus elastischem Material versehen ist.

8. Warnleuchte (1) zur Befestigung an einem Fahrzeug nach einem der vorherigen Ansprüche, ferner umfassend:
eine Haltevorrichtung (3), vorzugsweise auf dem Gehäuse (2) ausgebildete Haltevorrichtung (3), die mit einem Gegenstück (4) lösbar, insbesondere ohne Werkzeug lösbar, verbindbar ist.

9. Warnleuchte (1) zur Befestigung an einem Fahrzeug nach einem der vorherigen Ansprüche, ferner umfassend:
einen Projektor (19), der eine Grafik auf einen Boden projiziert.

10. Warnleuchte (1) zur Befestigung an einem Fahrzeug nach Anspruch 9, ferner umfassend:
einen Verstellhebel (21) zum Einstellen eines Anstellwinkels des Projektors (19).

11. Warnleuchte (1) zur Befestigung an einem Fahrzeug nach einem der vorherigen Ansprüche,
wobei die erste Leuchte (17) derart im oder am Gehäuse (2) angeordnet ist, dass die erste Leuchte (17) Licht im Wesentlichen quer, vorzugsweise horizontal und quer, zu einer Fahrtrichtung des Fahrzeuges abstrahlt und/oder
mindestens eine der zweiten Leuchten (18, 18a) derart im oder am Gehäuse (2) angeordnet ist, dass die mindestens eine zweite Leuchte (17) Licht im Wesentlichen quer, vorzugsweise horizontal und quer, zu einer Fahrtrichtung des Fahrzeuges abstrahlt.

12. Fahrzeug, insbesondere Fahrrad, Elektrorad, Dreirad, Rollstuhl, Kranken-und Behindertenfahrzeug, Elektro- und/oder Tretroller, mit einer Warnleuchte (1) nach einem der vorherigen Ansprüche,
wobei die Warnleuchte (1) seitlich derart, insbesondere an einem Gestänge (5), angebracht ist, dass die erste Leuchte (17) Licht (im Wesentlichen) quer, vorzugsweise horizontal und quer, zu einer Fahrtrichtung des Fahrzeugs abstrahlt.

13. Verfahren zum Betreiben einer Warnleuchte (1), vorzugsweise einer Warnleuchte gemäß einem der Ansprüche 1-11, umfassend:
Bestimmen einer Entfernung von anderen Fahrzeugen;
Ausgeben oder Verändern eines Steuerungsparameters auf Grundlage der bestimmten Entfernung; und
Steuern, insbesondere An- oder Ausschalten, vorzugsweise Erhöhen oder Verringern der Helligkeit, der ersten Leuchten (17), auf Grundlage des Steuerungsparameters.

14. Verfahren zum Betreiben einer Warnleuchte (1) nach Anspruch 13,
Ein- oder Ausschalten eines Projektors (19) auf Grundlage des Steuerungsparameters.

15. Verfahren zum Betreiben einer Warnleuchte (1) nach einem der Ansprüche 13 oder 14,
wiederholtes Bestimmen einer Ausrichtung der Warnleuchte (1) und ausschalten des Projektors (19) bei einer Abweichung der Ausrichtung der Warnleuchte (1) von einer Einbaulage der Warnleuchte (1).
